# EUROPÄISCHE PATENTSCHRIFT

(11) **EP 4 029 130 B1**
(45) Veröffentlichungstag und Bekanntmachung des Hinweises auf die Patenterteilung: **07.08.2024**
(21) Anmeldenummer: 20740213.2
(22) Anmeldetag: 10.06.2020
(51) Int. Cl.: H02K 11/25

(54) **SENSORBEFESTIGUNG ZUR TEMPERATURMESSUNG IN EINER ELEKTRISCHEN MASCHINE EINES KRAFTFAHRZEUGS**
SENSOR MOUNTING FOR TEMPERATURE MEASUREMENT IN A MOTOR VEHICLE ELECTRIC MACHINE
SUPPORT DE CAPTEUR POUR LA MESURE DE LA TEMPÉRATURE DANS UNE MACHINE ÉLECTRIQUE D'UN VÉHICULE AUTOMOBILE

(30) Priorität: 09.09.2019 DE 102019124035
(43) Veröffentlichungstag der Anmeldung: 20.07.2022
(73) Patentinhaber: Schaeffler Technologies AG & Co. KG, 91074 Herzogenaurach (DE)
(72) Erfinder: SILVERY, Christian, 75045 Walzbachtal (DE)
(86) Internationale Anmeldenummer: PCT/DE2020/100485
(87) Internationale Veröffentlichungsnummer: WO 2021/047709

(56) Entgegenhaltungen:
- WO-A1-2019/030110
- JP-A- 2003 092 858
- JP-A- 2009 100 538

## Beschreibung

Die Erfindung betrifft eine Sensorbefestigung, mit deren Hilfe ein Temperatursensor in einer elektrischen Maschine eines Kraftfahrzeugs befestigt werden kann, um eine in der elektrischen Maschine auftretende Temperatur zu messen.

Temperatursensoren werden in elektrischen Maschinen eingesetzt, um beispielsweise die Temperatur einzelner Komponenten zu überwachen. Insbesondere bei elektrischen Maschinen zum Antrieb eines Kraftfahrzeugs sind Temperaturen von Stator- und Rotorkomponenten zu überwachen. Bei elektrischen Maschinen mit verteilter Wicklung, aber auch bei Maschinen mit Einzelzahnwicklungen, sind die Temperatursensoren meist innerhalb des Stators verbaut, wo sie jedoch zu Wartungszwecken von außerhalb nicht mehr zugänglich sind. Für elektrischen Maschinen, insbesondere für elektrische Hybridfahrzeuge sowie für Elektrofahrzeuge oder für Radnabenantriebe, sind verschiedene Wicklungstechnologien für den Stator der elektrischen Maschinen bekannt. Für eine besonders dichte bzw. kompakte Wicklung werden beispielsweise Wicklungstechnologien wie die sogenannte Hairpin- oder Stab-Wellenwicklung verwendet. Eine Temperaturerfassung gestaltet sich bei derartigen Wicklungen schwierig, da diese sehr eng gewickelt oder bestückt sind, sodass kein Temperatursensor zwischen die Drähte der jeweiligen Wicklung gesteckt werden kann, um die Temperatur der Wicklung zu messen. Die Temperatur der Wicklung wird in diesem Fall an der radialen Außenseite gemessen, wo jedoch geringere Temperaturen als am radial inneren Rand der Wicklung auftreten, so dass eine zu geringe Maximaltemperatur der Wicklung gemessen wird.

Eine Sensorbefestigung ist in der JP 2003 092858 A offenbart. Für weiteren Stand der Technik sei auf die Schriften WO 2019/0301110 A1 sowie JP 2009 100538 A verwiesen.

Es ist die Aufgabe der Erfindung Maßnahmen aufzuzeigen, die eine wartungsfreundliche und genaue Messung einer Maximaltemperatur in einer Wicklung einer elektrischen Maschine für ein Kraftfahrzeug ermöglichen.

Die Lösung der Aufgabe erfolgt erfindungsgemäß durch eine Sensorbefestigung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Mit Hilfe der Sensorbefestigung kann der Temperatursensor in axialer Richtung an der zu überwachenden Wicklung vorbei geführt werden, so dass es möglich ist die Sensorbefestigung von radial außen her in die elektrische Maschine einzustecken und von radial außen her zu Wartungszwecken wieder herauszuziehen, ohne dass die Wicklung eine radiale Relativbewegung blockieren kann. Ein Anschlagen des Temperatursensors oder der Sensorbefestigung an der Wicklung in radialer Richtung kann vermieden werden. Mit Hilfe der Blattfeder kann der Haltekörper zusammen mit dem Temperatursensor in axialer Richtung vorgespannt werden. Hierzu kann sich die Blattfeder an der von dem Temperatursensor weg weisenden und in axialer Richtung der elektrischen Maschine weisenden Rückseite des Haltekörpers einerseits und an einem axial neben der Wicklung in einer Radialebene verlaufenden Oberseite eines Statorblechs des Stators der elektrischen Maschine andererseits abstützen. Das Federelement kann dadurch den Haltekörper zusammen mit dem Temperatursensor von dem Statorblech weg auf die Wicklung zu drücken. Das in axialer Richtung der elektrischen Maschine nachfedernde Federelement kann bei der Montage zusammengedrückt sein, um den Temperatursensor zusammen mit der Sensorbefestigung axial an der Wicklung von radial außen her entlang zu bewegen. Wenn die gewünschte radiale Relativlage zur Wicklung erreicht ist, kann das komprimierte Federelement sich entspannen und den Temperatursensor an die Wicklung mit einer verbliebenen Vorspannkraft anpressen. Hierbei kann der Temperatursensor insbesondere an den radial inneren Rand der Wicklung angepresst werden, wo die höchsten Temperaturen zu erwarten sind. Zwischen dem axialen Rand der Wicklung, an dem der Temperatursensor angepresst ist und einem in axialer Richtung mittigen inneren Drahtbereich der Wicklung liegt ein im Wesentlichen nur durch Wärmeleitung dominierter Wärmetransport vor, der entweder bei der Temperaturmessung in einer mit dem Temperatursensor verbundenen Überwachungseinheit rechnerisch berücksichtigt werden kann oder sogar vernachlässig werden kann. Die Sensorbefestigung kann in der sich nach dem Entspannen des Federelements ergebenen axialen Relativlage fixiert, insbesondere mit dem Sensorblech befestigt werden. Zudem kann die Erkenntnis ausgenutzt werden, dass der Haltekörper in der Regel aus einem elektrisch isolierenden Kunststoffmaterial hergestellt ist, das durch die von dem Federelement aufgebrachten Federkraft etwas gebogen werden kann, um eine thermische Kontaktierung des Temperatursensors mit dem radial inneren Rand der Wicklung sicherzustellen. Durch die in radialer Richtung verlagerbaren und axial an der Wicklung vorbeibewegbaren Sensorbefestigung kann der Temperatursensor von radial außen her am radial inneren Rand der Wicklung positioniert und mit Hilfe des Federelements thermisch angekoppelt werden, so dass eine wartungsfreundliche und genaue Messung einer Maximaltemperatur in einer Wicklung einer elektrischen Maschine für ein Kraftfahrzeug ermöglicht ist.

Die elektrische Maschine ist insbesondere ausgelegt im Motorbetrieb zum Antrieb des Kraftfahrzeugs eine Antriebsleistung in einen Antriebsstrang des Kraftfahrzeugs einzuleiten oder als Teil eines Radnabenantriebs ein einzelnes Rad des Kraftfahrzeugs anzutreiben. In einem Generatorbetrieb der elektrischen Maschine können an der elektrischen Maschine angreifende Schleppmomente genutzt werden, um elektrischen Energie zu erzeugen. Die elektrische Maschine weist einen feststehenden Stator und einen relativ zu dem Stator drehenden Rotor auf. Der Rotor kann Dauermagneten aufweisen, die mit Elektromagneten des Stators elektromagnetisch zusammenwirken können, um im Motorbetrieb und/oder Generatorbetrieb ein Drehmoment auszutausehen. Der Stator kann mindestens ein Statorblech aufweisen, das die Wicklung des Staors an einer axialen Seite überdeckt. Die Wicklung kann über Isolationselemente gegenüber dem Statorblech elektrisch isoliert sein. Die Sensorbefestigung kann insbesondere in einem zwischen dem Statorblech und der Wicklung ausgebildeten Zwischenraum in einer die Isolationselemente enthaltenen Isolationsschicht eingesteckt sein. Die Wicklung beruht insbesondere auf einer Spulenwickeltechnik, die eine hohe Leistungsdichte und eine hohe Energieeffizienz ermöglichen. Vorzugsweise beruht die Wicklung auf einer Hairpin- oder Stab-Wellenwicklung. Bei der Stab-Wellenwicklung kann die, insbesondere verteilte, Wicklung in einer Art Flechtverfahren erstellt und anschließend in die Stator-Nuten gefügt werden. Dadurch kann mit geringeren Querschnitten gearbeitet werden, die mögliche Nutanzahl erhöht werden und/oder der Effekt der Stromverdrängungsverluste gemindert werden. Die Montagelage der Sensorbefestigung entspricht insbesondere einer Relativlage der Sensorbefestigung innerhalb der elektrischen Maschine, in welche die Sensorbefestigung zusammen mit dem Temperatursensor verbaut werden soll, in welcher der Temperatursensor im Wesentlichen in radialer Richtung der elektrischen Maschine ausgerichtet ist und in seiner designierten Endlage an der Wicklung, insbesondere an dem radial inneren Rand der Wicklung, anliegt.

Insbesondere ist der Temperatursensor in dem Haltekörper, insbesondere in axialer und tangentialer Richtung, bewegungsfest aufgenommen. Der Haltekörper kann eine Relativbewegung des Temperatursensors zur Sensorbefestigung in axialer und tangentialer Richtung der elektrischen Maschine formschlüssig und/oder reibschlüssig blockieren. Dadurch kann vermieden werden, dass der Temperatursensor bei der Montage der Sensorbefestigung in der elektrischen Maschine verlagert wird und an einer falschen Stelle der Wicklung die Temperatur misst. Selbst wenn der Temperatursensor bei der Montage an der Wicklung anschlagen sollte, bleibt der Temperatursensor in der gewünschten Relativlage innerhalb des Haltekörpers, so dass die beabsichtigte Temperaturmessstelle am inneren Rand der Wicklung mit hoher Genauigkeit erreicht werden kann.

Erfindungsgemäß ist das Federelement einstückig mit dem Halteblech ausgestaltet. Die Bauteileanzahl und die Herstellungskosten können dadurch reduziert werden. Das Federelement kann beispielsweise aus einem Metallblech hergestellt sein, das zumindest im Bereich des Federelements elastisch federn kann, um die Federeigenschaften des Federelements bereitzustellen.

Besonders bevorzugt ist das Federelement als Blattfeder ausgestaltet. Das insbesondere einstückig mit dem Halteblech ausgestaltete Federelement kann aus der Radialebene der elektrischen Maschine in axialer Richtung der elektrischen Maschine zumindest in einem Teilbereich abstehen, um sich an dem Statorblech mit einer Federkraft abzustützen. Die Anpresskraft, mit welcher der Temperatursensor an die Wicklung gedrückt werden kann, kann durch eine konstruktiv und herstellungstechnisch einfache Maßnahme kostengünstig bereitgestellt werden.

Insbesondere ist ein freies Ende des Federelements in einer Aufnahmetasche des Haltekörpers in radialer Richtung der elektrischen Maschine relativ verschiebbar aufgenommen. Das als Blattfeder ausgestaltete Federelement kann einen im Wesentlichen U-förmigen Zwischenbereich aufweisen, über den die Federkraft in axialer Richtung der elektrischen Maschine aufgebracht werden kann. Das Federelement kann hierbei an beiden Seiten eingespannt sein, wobei das in die Aufnahmetasche eingesteckte freie Ende des Federelements einen Versatz in radialer Richtung der elektrischen Maschine, der bei einer Kompression des U-förmigen Zwischenbereichs entsteht, mitgehen kann ohne zu blockieren. An dem anderen Ende kann das Federelement mit dem Haltekörper und/oder mit dem Halteblech bewegungsfest fixiert sein, insbesondere einstückig mit dem Halteblech ausgeführt sein. Durch die Haltetasche kann die Relativlage und die Federvorspannung des Federelements zu einem Großteil vorgegeben sein.

Vorzugsweise weist der Haltekörper einen Aufnahmeschacht zum Einstecken des Temperatursensors durch eine Relativbewegung in radialer Richtung der elektrischen Maschine auf, wobei von dem Aufnahmeschacht unter einem Winkel, insbesondere im Wesentlichen 90° ± 10°, ein Kabelschacht zur Aufnahme von elektrischen Leitungen des Temperatursensors abgeht. Mit Hilfe des Aufnahmeschachts kann der Temperatursensor leicht in die Sensorbefestigung eingesteckt werden, wobei der Aufnahmeschacht insbesondere eine Relativbewegung des Temperatursensors relativ zur Sensorbefestigung in axialer und tangentialer Richtung der elektrischen Maschine blockieren kann. Wenn der Temperatursensor soweit in radialer Richtung der elektrischen Maschine in den Aufnahmeschacht eingeschoben ist, dass der Temperatursensor seine designierten Endlage erreicht hat, können die elektrischen Leitungen des Temperatursensors, über welche die Messsignale des Temperatursensors zu einer Überwachungseinheit geleitet werden könne, abgewinkelt und in den Kabelschacht eingesteckt werden. Besonders bevorzugt sind die elektrischen Leitungen innerhalb des Kabelschachts verklemmt, insbesondere um eine Zugentlastung der elektrischen Leitungen zu erreichen. Durch die abgewinkelten elektrischen Leitungen, die vorzugsweise in dem Kabelschacht verklemmt sind, kann eine Relativbewegung des Temperatursensors innerhalb des Aufnahmeschacht in radialer Richtung de elektrischen Maschine blockiert oder zumindest minimiert werden. Der Temperatursensor kann dadurch bewegungsfest in der Sensorbefestigung aufgenommen sein.

Besonders bevorzugt weist der Aufnahmeschacht eine Haltetasche zur Aufnahme eines freien Endes des Temperatursensors auf, wobei insbesondere die Haltetasche eine Relativbewegung des Temperatursensors zum Haltekörper in axialer und/oder tangentialer Richtung der elektrischen Maschine blockiert. Insbesondere ist das freien Ende des Temperatursensors in der Haltetasche verkeilt. Ein Spiel des Temperatursensors in dem Aufnahmeschacht kann dadurch minimiert werden. Das in der Haltetasche eingesteckte freie Ende des Temperatursensors kann ein Heraushebeln des Temperatursensors aus dem Aufnahmeschacht auch unter Last sicher verhindern.

Insbesondere weist das Halteblech mindestens eine Befestigungsöffnung zur Befestigung mit einem Statorblech und/oder zur Befestigung mit einer Maschinenhalterung der elektrischen Maschine auf. Insbesondere sind zwei oder mehr Befestigungsöffnungen vorgesehen, um ein Verdrehen des Statorblechs zu verhindern. Das Halteblech kann dadurch leicht mit dem Stator bewegungsfest befestigt werden. Hierbei ist es möglich in dem Statorblech des Stators mindestens eine separate Befestigungsöffnung vorzusehen, um das Halteblech mit dem Statorblech zu verschrauben. Es ist auch möglich eine sowieso zu Befestigung mehrere Statorbleche miteinander und/oder eine sowieso zur Befestigung der elektrischen Maschine an einer Halterung vorgesehene Öffnung in dem Statorblech zur Befestigung des Halteblechs vorzusehen, so dass keine zusätzliche Öffnung in dem Statorblech vorgesehen sein muss und auch ein zusätzliche Befestigungsmittel eingespart werden kann.

Vorzugsweise weist das Halteblech mindestens einen abgewinkelten Ansatz zur Begrenzung einer radialen Einstecktiefe und/oder zur Verdrehsicherung auf. Der abgewinkelte Ansatz des Halteblechs kann bei einer Relativbewegung der Sensorbefestigung zusammen mit dem Temperatursensor in radialer Richtung der elektrischen Maschine relativ zu dem Statorblech an dem Statorblech anschlagen, um eine weitere Relativbewegung zu blockieren. Der abgewinkelte Ansatz kann hierbei eine Erstreckung aufweisen, die zudem ein Verdrehen des Halteblechs an dem Statorblech blockiert. Vorzugsweise sind mindestens zwei zueinander beabstandete abgewinkelte Ansätze vorgesehen, die insbesondere in unterschiedlichen Richtungen an dem Statorblech anschlagen. Beispielsweise kann das Statorblech im Wesentlichen rechteckig ausgeformt sein, so dass die Sensorbefestigung an einer Ecke des Statorblech radial in einen Zwischenraum zwischen der Wicklung und dem Statorblech solange eingeschoben werden kann, bis die zwei verschiedenen abgewinkelten Ansätze an unterschiedlichen Seiten des Statorblechs anschlagen und mit einem geringen Materialeinsatz eine Verdrehsicherung für die Sensorbefestigung ausbilden.

Die Erfindung betrifft ferner eine Statoranordnung für eine elektrische Maschine mit mindestens einem Statorblech, einer Wicklung zur Ausbildung eines Elektromagneten, zwischen dem Statorblech und der Wicklung vorgesehene und in Umfangsrichtung zueinander beabstandet angeordnete Isolationselemente zur elektrischen Isolierung der Wicklung gegenüber dem Statorblech und eine mit dem Statorblech befestigte Sensorbefestigung, die wie vorstehend beschrieben aus- und weitergebildet sein kann, wobei der in dem Haltekörper aufgenommene Temperatursensor zwischen zwei in Umfangsrichtung nachfolgenden Isolationselementen im Wesentlichen radial verläuft und von dem an dem Statorblech abgestützten Federelement gegen die Wicklung, insbesondere einem radial inneren Rand der Wicklung, thermisch leitend angepresst ist. Durch die in radialer Richtung verlagerbaren und axial an der Wicklung vorbeibewegbaren Sensorbefestigung kann der Temperatursensor von radial außen her am radial inneren Rand der Wicklung positioniert und mit Hilfe des Federelements thermisch angekoppelt werden, so dass eine wartungsfreundliche und genaue Messung einer Maximaltemperatur in einer Wicklung einer elektrischen Maschine für ein Kraftfahrzeug ermöglicht ist.

Die Erfindung betrifft ferner eine elektrische Maschine zum elektrischen Antrieb eines Kraftfahrzeugs mit einer Statoranordnung, die wie vorstehend beschrieben aus- und weitergebildet sein kann, und einem mit einem Antriebsstrang des Kraftfahrzeugs ankoppelbaren und mit den Elektromagneten der Statoranordnung zusammenwirkenden Rotor. Durch die in radialer Richtung verlagerbaren und axial an der Wicklung vorbeibewegbaren Sensorbefestigung kann der Temperatursensor von radial außen her am radial inneren Rand der Wicklung positioniert und mit Hilfe des Federelements thermisch angekoppelt werden, so dass eine wartungsfreundliche und genaue Messung einer Maximaltemperatur in einer Wicklung einer elektrischen Maschine für ein Kraftfahrzeug ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Schnittansicht eines Teils einer Sensorbefestigung,
- Fig. 2:: eine schematische perspektivische Ansicht der Sensorbefestigung aus Fig.1 während der Montage eines Temperatursensors,
- Fig.3:: eine schematische perspektivische Ansicht der Sensorbefestigung aus Fig. 2 nach der Montage des Temperatursensors,
- Fig. 4:: eine schematische perspektivische Ansicht einer alternativen Ausführungsform einer Sensorbefestigung mit einem fertig montierten Temperatursensor,
- Fig. 5:: eine schematische perspektivische Ansicht der Sensorbefestigung aus Fig. 3 mit einem fertig montierten Temperatursensor während eines Einsetzens in eine elektrische Maschine und
- Fig. 6:: eine schematische perspektivische Schnittansicht der Sensorbefestigung aus Fig. 5 im eingesetzten Zustand.

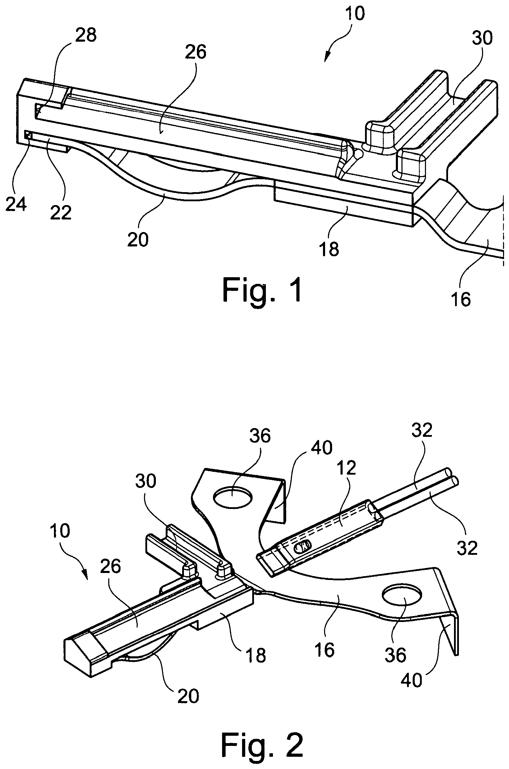

Die in Fig. 1 dargestellte Sensorbefestigung 10 kann zur Befestigung eines, insbesondere als NTC- oder PTC-Widerstandselement ausgestalteten, Temperatursensors 12 in einer zum Antrieb eines Kraftfahrzeugs vorgesehenen elektrischen Maschine verwendet werden, um die Temperatur einer Wicklung 14 von Elektromagneten eines Stators der elektrischen Maschine überwachen zu können. Die Sensorbefestigung 10 weist ein metallisches Halteblech 16 auf, das mit einem aus einem elektrisch isolierenden Kunststoffmaterial hergestellten Haltekörper 18 verbunden ist. Hierzu kann beispielsweise das Halteblech 16 in einem Teilbereich von dem Haltekörper 18 umspritzt sein. Mit dem Halteblech 16 ist ein als Blattfeder ausgestaltetes Federelement 20 einstückig verbunden, das eine Vorspannkraft in axialer Richtung der elektrischen Maschine aufprägen kann. Ein freies Ende 22 des als Blattfeder ausgestalteten Federelements 20 ist in einer Aufnahmetasche 24 aufgenommen, wobei das freie Ende 22 in der Aufnahmetasche 24 soweit verschiebbar ist, dass ein Versatz des freien Endes 22 bei einer Kompression des U-förmig abstehenden Teilbereichs des Federelements 20 innerhalb der Aufnahmetasche 24 ausgeglichen werden kann. Oberhalb des Federelements 20 bildet der Haltekörper 18 einen Aufnahmeschacht 26 aus, in den der Temperatursensor 12 in Längsrichtung eingeschoben werden kann und der gleichzeitig eine Relativbewegung des Temperatursensors 12 quer zur Längsrichtung formschlüssig blockiert. Wenn die Sensorbefestigung 10 mit ihrer Längsrichtung in radialer Richtung der elektrischen Maschine ausgerichtet ist, ist eine Relativbewegung des Temperatursensors 12 in tangentialer und axialer Richtung der elektrischen Maschine blockiert. Ein freies Ende des Temperatursensors 12 kann in eine am Ende des Aufnahmeschachts 26 ausgebildeten Haltetasche 28 eingesteckt, vorzugsweise verkeilt, werden. Zudem geht von dem Aufnahmeschacht 26 im Wesentlichen rechtwinkelig ein von dem Haltekörper 18 einstückig ausgebildeter Kabelschacht 30 ab.

Wie in Fig. 2 dargestellt, kann der Temperatursensor 12 über eine Relativbewegung entlang der Längsrichtung des Aufnahmeschachts 26 in den Aufnahmeschacht 26 eingesteckt werden. Mit dem Temperatursensor 12 verbundene elektrische Leitungen 32 können hierbei an der Rückseite des Temperatursensors 12 in Längsrichtung abstehen.

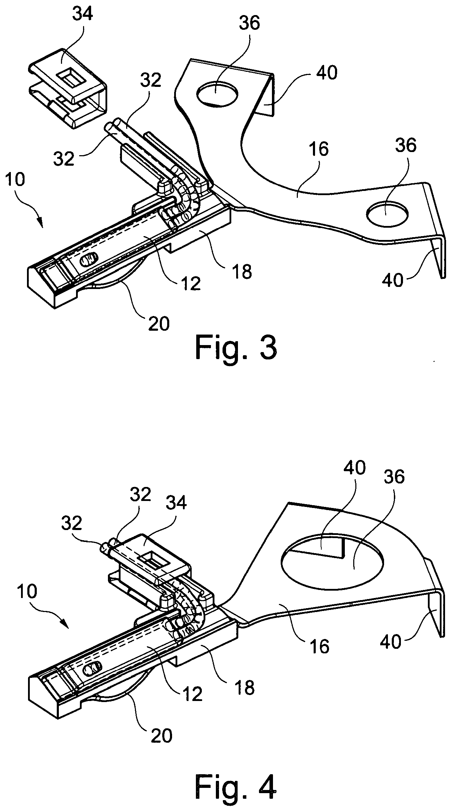

Wie in Fig. 3 dargestellt, können die elektrischen Leitungen 32, nachdem der Temperatursensor 12 seine designierte Relativlage innerhalb des Aufnahmeschachts 26 des Haltekörpers 18 gefunden hat, im wesentlichen rechtwinkelig umgebogen und in den Kabelschacht 30 eingesteckt werden, wodurch eine Relativbewegung des Temperatursensors 12 in Längsrichtung des Aufnahmeschachts 26 von den elektrischen Leitungen 32 blockiert werden kann.

Wie in Fig. 4 dargestellt, können die elektrischen Leitungen 32 mit Hilfe eines Klemmelements 34 verklemmt werden, wodurch eine Zugentlastung realisiert werden kann. Das Halteblech 16 kann mindestens eine Befestigungsöffnung 36 aufweisen, um die Sensorbefestigung 10 zusammen mit dem aufgenommenen Temperatursensor 12 in der elektrischen Maschine zu verbauen. Hierzu können insbesondere mehrere Befestigungsöffnungen 36 vorgesehen sein, wie in Fig. 2 und Fig. 3 dargestellt, die mit separaten Befestigungsmitteln mit einem Statorblech 38 befestigt werden können. Es ist aber auch möglich beispielsweise nur eine Befestigungsöffnung 36 vorzusehen, wie in Fig. 4 dargestellt, beispielsweise um die Sensorbefestigung 10 mit einem zur Befestigung der elektrischen Maschine in einer Halterung sowieso vorgesehenen Befestigungsmittel zu befestigen. Der Verschnitt bei der Herstellung des Halteblechs 16 kann dadurch reduziert sein. Das Halteblech 16 weist zudem zueinander beabstandete abgewinkelte Ansätze 40 auf.

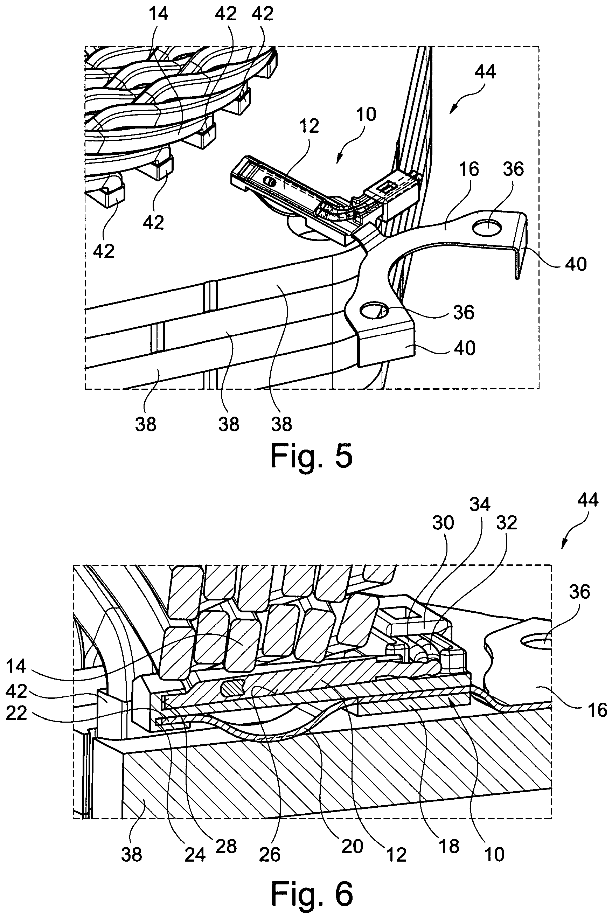

Wie in Fig. 5 dargestellt, können die Ansätze 40 an unterschiedlichen Seiten des Statorblechs 38 anschlagen, um zur Definition der designierten Endlage die Einstecktiefe der Sensorbefestigung 10 zu begrenzen und eine Verdrehsicherung auszubilden. Über in radialer Richtung verlaufende Isolationselemente 42 ist die Wicklung 14 des Stators zu den Statorblechen 38 beabstandet. Durch eine Relativbewegung der Sensorbefestigung 10 in radialer Richtung der elektrischen Maschine kann der mitgeführte Temperatursensor 12 in eine in Umfangsrichtung zwischen zwei einander nachfolgenden Isolationselementen 42 vorgesehenen Wicklungsnutöffnung eingefädelt werden und axial an der Wicklung 14 verbeigeschoben werden.

Wie in Fig. 6 dargestellt, kann das Federelement 20 die Sensorbefestigung 10 von dem Statorblech 38 wegdrücken, wodurch das Sensorelement 12 an einem radial inneren Randbereich der Wicklung 14, wo im laufenden Betrieb die höchste Temperatur zu erwarten ist, angepresst wird. Dadurch ergibt sich eine thermische Anbindung zwischen dem Temperatursensor 12 und der Wicklung 14, die nicht durch eine dazwischenliegende thermisch isolierende Zwischenschicht beeinträchtigt wird. Zudem ist der Temperatursensor 12 in dem Zwischenraum zwischen den Isolationselementen 42 und zwischen der Wicklung 14 und dem Statorblech 38 vor anderen Medien geschützt, so dass beispielsweise eine Beeinträchtigung der Temperaturmessung durch einen erzwungenen konvektiven Wärmeabtransport vermieden ist. Der aus der Wicklung 14, den Isolationselementen 42 und den Statorblechen 38 zusammengesetzte Stator der elektrischen Maschine bildet zusammen mit der Sensorbefestigung 10 und dem Temperatursensor 12 eine Statoranordnung 44 aus, die als eine gemeinsame Baueinheit mit einem nicht dargestellten Rotor der elektrischen Maschine zusammenwirken kann. Hierbei kann sehr leicht die Sensorbefestigung 10 zu Wartungszwecken demontiert werden, beispielsweise um einen defekten Temperatursensor 12 auszutauschen, und wieder eingesetzt werden.

### Bezugszeichenliste

- 10: Sensorbefestigung
- 12: Temperatursensor
- 14: Wicklung
- 16: Halteblech
- 18: Haltekörper
- 20: Federelement
- 22: freies Ende
- 24: Aufnahmetasche
- 26: Aufnahmeschacht
- 28: Haltetasche
- 30: Kabelschacht
- 32: elektrische Leitung
- 34: Klemmelements
- 36: Befestigungsöffnung
- 38: Statorblech
- 40: Ansatz
- 42: Isolationselement
- 44: Statoranordnung

## Patentansprüche

1. Sensorbefestigung für eine elektrische Maschine zum Antrieb eines Kraftfahrzeugs, mit
einem Haltekörper (18) zur Aufnahme eines Temperatursensors (12),
einem mit dem Haltekörper (18) befestigten Halteblech (16) zur Befestigung mit der elektrischen Maschine in einer definierten Montagelage relativ zur elektrischen Maschine, wobei der Temperatursensor (12) in der Montagelage im Wesentlichen in radialer Richtung der elektrischen Maschine ausgerichtet ist, und einem an dem Haltekörper (18) abgestützten Federelement (20) zur Bereitstellung einer Federvorspannung in axialer Richtung zum Andrücken des Temperatursensors (12) an einen radial inneren Rand einer Wicklung (14)
wobei das Federelement (20) einstückig mit dem Halteblech (16) ausgestaltet ist.

2. Sensorbefestigung nach Anspruch 1 **dadurch gekennzeichnet, dass** der Temperatursensor (12) in dem Haltekörper (18), insbesondere in axialer und tangentialer Richtung, bewegungsfest aufgenommen ist.

3. Sensorbefestigung nach einem der Ansprüche 1 oder 2 **dadurch gekennzeichnet, dass** das Federelement (20) als Blattfeder ausgestaltet ist.

4. Sensorbefestigung nach Anspruch 3 **dadurch gekennzeichnet, dass** ein freies Ende (22) des Federelements (20) in einer Aufnahmetasche (24) des Haltekörpers (18) in radialer Richtung der elektrischen Maschine relativ verschiebbar aufgenommen ist.

5. Sensorbefestigung nach einem der Ansprüche 1 bis 4 **dadurch gekennzeichnet, dass** der Haltekörper (18) einen Aufnahmeschacht (26) zum Einstecken des Temperatursensors (12) durch eine Relativbewegung in radialer Richtung der elektrischen Maschine aufweist, wobei von dem Aufnahmeschacht (18) unter einem Winkel, insbesondere im Wesentlichen 90° ± 10°, ein Kabelschacht (30) zur Aufnahme von elektrischen Leitungen (32) des Temperatursensors (12) abgeht.

6. Sensorbefestigung nach Anspruch 5 **dadurch gekennzeichnet, dass** der Aufnahmeschacht (18) eine Haltetasche (28) zur Aufnahme eines freien Endes des Temperatursensors (12) aufweist, wobei insbesondere die Haltetasche (28) eine Relativbewegung des Temperatursensors (12) zum Haltekörper (18) in axialer und/oder tangentialer Richtung der elektrischen Maschine blockiert.

7. Sensorbefestigung nach einem der Ansprüche 1 bis 6 **dadurch gekennzeichnet, dass** das Halteblech (16) mindestens eine Befestigungsöffnung (36) zur Befestigung mit einem Statorblech (38) und/oder zur Befestigung mit einer Maschinenhalterung der elektrischen Maschine aufweist.

8. Sensorbefestigung nach einem der Ansprüche 1 bis 7 **dadurch gekennzeichnet, dass** das Halteblech (16) mindestens einen abgewinkelten Ansatz (40) zur Begrenzung einer radialen Einstecktiefe und/oder zur Verdrehsicherung aufweist.

9. Statoranordnung für eine elektrische Maschine mit mindestens einem Statorblech (38), einer Wicklung (14) zur Ausbildung eines Elektromagneten, zwischen dem Statorblech (38) und der Wicklung (14) vorgesehene und in Umfangsrichtung zueinander beabstandet angeordnete Isolationselemente (42) zur elektrischen Isolierung der Wicklung (14) gegenüber dem Statorblech (38) und eine mit dem Statorblech (38) befestigte Sensorbefestigung (10) nach einem der Ansprüche 1 bis 8, wobei der in dem Haltekörper (18) aufgenommene Temperatursensor (12) zwischen zwei in Umfangsrichtung nachfolgenden Isolationselementen (42) im Wesentlichen radial verläuft und von dem an dem Statorblech (38) abgestützten Federelement (20) gegen die Wicklung (14), insbesondere einem radial inneren Rand der Wicklung (14), thermisch leitend angepresst ist.

## Claims

1. A sensor mounting for an electric machine for the drive of a motor vehicle, having a retaining body (18) for accommodating a temperature sensor (12), a metal retaining plate (16) that is fastened to the retaining body (18) and is intended for fastening to the electric machine in a defined installation position relative to the electric machine, wherein, in the installation position, the temperature sensor (12) is oriented substantially in the radial direction of the electric machine, and having a spring element (20) that is supported on the retaining body (18) and is intended for providing spring prestressing in the axial direction for the purpose of pressing the temperature sensor (12) against a radially inner edge of a winding (14), wherein the spring element (20) is designed in one piece with the retaining plate (16).

2. The sensor mounting according to claim 1, **characterised in that** the temperature sensor (12) is accommodated in the retaining body (18), in particular in an axial and tangential direction, so that it cannot move.

3. The sensor mounting according to any one of claims 1 or 2, **characterised in that** the spring element (20) is designed as a leaf spring.

4. The sensor mounting according to claim 3, **characterised in that** a free end (22) of the spring element (20) is accommodated in a receiving pocket (24)of the retaining body (18) so that it can be moved relatively in the radial direction of the electric machine.

5. The sensor mounting according to any one of claims 1 to 4, **characterised in that** the retaining body (18) has a receiving shaft (26) for inserting the temperature sensor (12) through a relative movement in the radial direction of the electric machine, wherein a cable shaft (30) for accommodating electrical lines (32) of the temperature sensor (12) is directed at an angle, in particular 90° ± 10°, away from the receiving shaft (18).

6. The sensor mounting according to claim 5, **characterised in that** the receiving shaft (18) has a retaining pocket (28) for accommodating a free end of the temperature sensor (12), wherein in particular the retaining pocket (28) blocks a relative movement of the temperature sensor (12) to the retaining body (18) in the axial and/or tangential direction of the electric machine.

7. The sensor mounting according to any one of claims 1 to 6, **characterised in that** the retaining plate (16) has at least one fastening opening (36) for fastening to at least one of a stator lamination (38) and/or for fastening a machine mounting of the electric machine.

8. The sensor mounting according to any one of claims 1 to 7, **characterised in that** the retaining plate (16) has at least one angled projection (40) for limiting a radial insertion depth and/or preventing rotation.

9. A stator arrangement for an electric machine having at least one stator lamination (38), a winding (14) for forming an electromagnet, insulation elements (42) provided between the stator lamination (38) and the winding (14) and arranged spaced apart from one another in a circumferential direction for electrically insulating the winding (14) with respect to the stator lamination (38), and a sensor mounting (10) according to any one of claims 1 to 8 fastened to the stator lamination (38), wherein the temperature sensor (12) accommodated in the retaining body (18) extends substantially radially between two insulation elements (42) following one another in the circumferential direction and is pressed in a thermally conductive manner against the winding (14), in particular a radially inner edge of the winding (14) by the spring element (20) supported on the stator lamination (38).

## Revendications

1. Support de capteur pour une machine électrique destinée à entraîner un véhicule automobile, comportant un corps de retenue (18) destiné à recevoir un capteur de température (12), une tôle de retenue (16) fixée au corps de retenue (18) destinée à fixer la machine électrique dans une position de montage définie par rapport à la machine électrique, dans lequel le capteur de température (12), dans la position de montage, est orienté essentiellement dans la direction radiale de la machine électrique, et un élément à ressort (20) venant en appui sur le corps de retenue (18) destiné à fournir une précontrainte de ressort dans la direction axiale pour presser le capteur de température (12) sur un bord radialement intérieur d'un enroulement (14), dans lequel l'élément de ressort (20) est réalisé d'un seul tenant avec la tôle de retenue (16).

2. Support de capteur selon la revendication 1, **caractérisé en ce que** le capteur de température (12) est logé dans le corps de retenue (18) de manière à être immobile, en particulier dans la direction axiale et tangentielle.

3. Support de capteur selon l'une des revendications 1 ou 2 **caractérisé en ce que** l'élément à ressort (20) est réalisé sous la forme d'un ressort à lames.

4. Support de capteur selon la revendication 3 **caractérisé en ce qu'**une extrémité libre (22) de l'élément à ressort (20)est logée dans une poche de réception (24) du corps de retenue (18) de manière à pouvoir se déplacer dans la direction radiale par rapport à la machine électrique.

5. Support de capteur selon l'une des revendications 1 à 4 **caractérisé en ce que** le corps de retenue (18) présente une gaine de réception (26) destinée à l'insertion du capteur de température (12) par un mouvement relatif dans la direction radiale de la machine électrique, dans lequel une gaine de câble (30) destinée à la réception de lignes électriques (32) du capteur de température (12) partent de la gaine de réception (18) selon un angle, en particulier sensiblement de 90° ± 10°.

6. Support de capteur selon la revendication 5 **caractérisé en ce que** la gaine de réception (18) présente une poche de retenue (28) destinée à recevoir une extrémité libre du capteur de température (12), dans lequel en particulier la poche de retenue (28) bloque un mouvement relatif du capteur de température (12) vers le corps de retenue (18) dans la direction axiale et/ou tangentielle de la machine électrique.

7. Support de capteur selon l'une des revendications 1 à 6 **caractérisé en ce que** la tôle de retenue (16) présente au moins une ouverture de fixation (36) destinée à la fixation à l'aide d'une tôle de stator (38) et/ou à la fixation à l'aide d'un élément de retenue de machine de la machine électrique.

8. Support de capteur selon l'une des revendications 1 à 7 **caractérisé en ce que** la tôle de retenue (16) présente au moins un bossage (40) coudé destiné à délimiter une profondeur d'insertion radiale et/ou pour empêcher la rotation.

9. Agencement de stator pour une machine électrique comportant au moins une tôle de stator (38), un enroulement (14) pour la formation d'un électroaimant, des éléments isolants (42) disposés entre la tôle de stator (38) et l'enroulement (14) et agencés à distance les uns des autres dans la direction circonférentielle pour l'isolation électrique de l'enroulement (14) par rapport à la tôle de stator (38) et un support de capteur (10) fixé à la tôle de stator (38) selon l'une des revendications 1 à 8 , dans lequel le capteur de température (12) logé dans le corps de retenue (18) s'étend essentiellement radialement entre deux éléments isolants (42) qui se suivent dans la direction circonférentielle et est pressé par conduction thermique par l'élément à ressort (20) venant en appui sur la tôle de stator (38) contre l'enroulement (14), en particulier sur un bord radialement intérieur de l'enroulement (14).
